# EUROPEAN PATENT SPECIFICATION

(11) **EP 3 890 131 B1**
(45) Date of publication and mention of the grant of the patent: **26.11.2025**
(21) Application number: 20167365.4
(22) Date of filing: 31.03.2020
(51) Int. Cl.: H02B 11/10, H02B 11/12

(54) **ELECTRICAL SWITCHGEAR WITH AN ELECTRICAL AND MECHANICAL CIRCUIT BREAKER POSITION INDICATOR**
ELEKTRISCHE SCHALTANLAGE MIT EINER ELEKTRISCHEN UND MECHANISCHEN POSITIONSANZEIGER FÜR SCHUTZSCHALTER
APPAREILLAGE ÉLECTRIQUE AVEC INDICATEUR DE POSITION DE DISJONCTEUR ÉLECTRIQUE ET MÉCANIQUE

(43) Date of publication of application: 06.10.2021
(73) Proprietor: ABB Schweiz AG, 5400 Baden (CH)
(72) Inventor: Cenci, Claudio, 24044 Dalmine (BG) (IT); Cortinovis, Gianluca, 24021 Albino (BG) (IT)
(74) Representative: De Bortoli, Eros

(56) References cited:
- CN-A- 110 176 734
- DE-A1- 4 420 582
- US-A1- 2001 022 263
- US-A1- 2011 147 173

## Description

The present invention relates to an electrical and mechanical switching device position indicator in an electrical switchgear, in particular to an electrical and mechanical switching device position indicator in a low or medium voltage switchgear equipped with a withdrawable electrical switching apparatus, for instance a circuit breaker, which is movable between a disconnected position, an intermediate position and a service position.

For the purposes of the present invention, the term "low or medium voltage" is used to designate operating voltages up to some tens of kV AC. Although in the present disclosure reference will be primarily made to switchgears comprising a withdrawable circuit breaker, the technical solution disclosed herein is in general applicable also to switching devices other than circuit breakers.

It is known from the state of the art that electrical switchgears, in particular low and medium voltage switchgear, can be equipped with a switching device, usually a circuit breaker, that can be moved between a disconnected (racked-out), test position, an intermediate position, and a connected (racked-in) service position.

For such purpose, the switching device is normally supported by a manual or motorized truck that can move from an extraction position with respect to the switchgear - in which the connection terminals of the switching device are disengaged from corresponding connection terminals of the switchgear - to an insertion position in the switchgear, in which the connection terminals of the switching device are electrically connected to the respective connection terminals of the switchgear. During the operation of racking the withdrawable circuit breaker, the circuit breaker is racked inside the switchgear from a withdrawn "test" position to a service position, passing through an intermediate position.

Thus, in electrical switchgear equipped with withdrawable switching device, in particular circuit breaker, there are three possible status of the circuit breaker: circuit breaker in test position (racked-out); circuit breaker in an intermediate position; circuit breaker in service position (racked-in).

An indication of the status of the switching device is generally required and - to this purpose - in standard electrical switchgears an electrical signalling system gives the information about the above-mentioned status of the switching device. Such electrical signalling is normally provided by dedicated electrical contacts which are placed inside the truck and moved by a dedicated kinematic chain.

In some cases, an additional visual indication is required by the costumer. In such a case, the signalling is provided by a dedicated mechanical system which has its own dedicated kinematic chain and its position must be related to the position of other devices (e.g., shutter position, opening door interlocks, and similar devices).

In practice, in a number of existing solutions for electrical switchgears equipped with withdrawable switching devices, there are two different devices (electrical and mechanical) for the same signalling. Examples of such known arrangements are shown in DE4420582A1, US2011/147173A1 and US2001/022263A1.

One of the problems in the currently existing switchgear is due to the synchronization which is required between the two signalling systems, which should be very accurate and which is very difficult to achieve. Normally a lengthy procedure is required to adjust and fine calibrate the two different signalling systems in order to achieve a satisfactory result in terms of accurate synchronization between them.

Moreover, the need of having two separate kinematic chains for the two different signalling system complicates the design of the switchgear and makes its manufacturing more complicated and expensive.

The main aim of the present invention is to provide an auxiliary/control switches system for an electrical and mechanical switching device position indicator in an electrical switchgear, in particular to an electrical and mechanical switching device position indicator in a low or medium voltage switchgear equipped with a withdrawable electrical switching apparatus, that allows solving or mitigating the above-mentioned problems.

More in particular, it is an object of the present invention to provide an electrical and mechanical switching device position indicator in an electrical switchgear, in particular to provide an electrical and mechanical switching device position indicator in a low or medium voltage switchgear equipped with a withdrawable electrical switching apparatus, which is able to provide both electrical and mechanical indication of the position of the electrical switching apparatus inside the switchgear.

As a further object, the present invention is aimed at providing an electrical and mechanical switching device position indicator in an electrical switchgear, in particular an electrical and mechanical switching device position indicator in a low or medium voltage switchgear equipped with a withdrawable electrical switching apparatus, which guarantees and optimal synchronization between electrical and mechanical signaling of the position of the electrical switching apparatus inside the switchgear.

As a further object, the present invention is aimed at providing an electrical and mechanical switching device position indicator in an electrical switchgear, in particular an electrical and mechanical switching device position indicator in a low or medium voltage switchgear equipped with a withdrawable electrical switching apparatus, that can be easily installed in said switchgear.

As a further object, the present invention is aimed at providing an electrical and mechanical switching device position indicator in an electrical switchgear, in particular an electrical and mechanical switching device position indicator in a low or medium voltage switchgear equipped with a withdrawable electrical switching apparatus, in which the adjustment and calibration times are reduces.

Still another object of the present invention is to provide an electrical and mechanical switching device position indicator in an electrical switchgear, in particular to provide an electrical and mechanical switching device position indicator in a low or medium voltage switchgear equipped with a withdrawable electrical switching apparatus, that can be easily manufactured at industrial level, at competitive costs with respect to the solutions of the state of the art.

In a further aspect, the present invention also relates to an electrical switchgear, in particular a Medium Voltage electrical switchgear equipped with a withdrawable electrical switching apparatus, provided with an electrical and mechanical switching device position indicator as described herein.

In order to fulfill these aim and objects, the present invention provides an electrical switchgear according to claim 1.

In this way, it is possible to provide an electrical and mechanical switching device position indicator that overcomes the problems and drawbacks of the existing systems for indicating the position of the switching device inside the switchgear.

In practice, with the switching device position indicator of the present invention, a single kinematic chain is needed for providing the required combination of an electrical signal and a mechanical indication of the position of the switching device, thereby greatly reducing the design complexity of the existing systems and devices. Also, the assembling time and assembling complexity are therefore greatly reduced with respect to prior art solutions.

In practice, in the position indicator device of the present invention a single kinematic chain is provided and actuates both electrical and mechanical signalling means at the same time. Therefore, there is no need of complicated and time-consuming synchronization procedures between mechanical and electrical signalization, because such synchronization is intrinsic in the design of the position indicator device of the present disclosure.

In addition, the presently proposed device is much cheaper than the standard ones, since only one kinematic chain is needed.

According to the present invention, said kinematic chain comprises a frame which is fixed on said enclosure and a movable assembly which is pivoted on said frame and operatively connected to said truck.

The electrical signal is provided by a first and a second microswitches which are positioned on said frame and respectively actuated in correspondence of said first, racked-out, test position, and said third, racked-in, service position of said truck and circuit breaker assembly.

In practice, the said first, racked-out, test position of the truck and circuit breaker assembly is detected when the first microswitch is in an "active" position, while the second microswitch is in a "rest" position. Then, the second, intermediate position of the truck and circuit breaker assembly is detected when both the first and second microswitches are in the "rest" position. Finally, the third, racked-in, service position of the truck and circuit breaker assembly is detected when the first microswitch is in the "rest" position, while the second microswitch is in the "active" position.

To this purpose, the kinematic chain of the device comprises a first and a second actuating surface which interacts with respectively said first and second microswitches positioned on said movable assembly so as to change their "active" or "rest" status depending on the position of the truck and circuit breaker assembly as described above.

Said movable assembly comprises a first plate which is pivotally connected to said frame, a second elongated plate having a first end rigidly connected to said first plate, and a third plate which is rigidly connected to a second end, opposite to said first end, of said second elongated plate.

More in details, the first plate extends from said first end of said second elongated plate in a first direction perpendicular to the longitudinal extension of said second elongated plate, and in the third plate extends from said second end of said second elongated plate in a second direction perpendicular to the longitudinal extension of said second elongated plate and opposite to said first direction.

Advantageously, the first, second and third plate are made a single body suitably shaped as described above.

In a typical embodiment of the electrical and mechanical circuit breaker position indicator of the present disclosure, the above-mentioned first actuating surface preferably comprises a cam surface which is positioned on said second elongated plate and which cooperates with said first microswitch in correspondence of said first, racked-out, test position of said truck and circuit breaker assembly; in turn, the above-mentioned first second actuating surface preferably comprises a portion of said second elongated plate which cooperates with said second microswitch in correspondence of said third, racked-in, service position of said truck and circuit breaker assembly.

According to a general embodiment of the presently disclosed electrical and mechanical circuit breaker position indicator, said kinematic chain advantageously comprises a plate having first, second and third visual indications respectively representative of said first, racked-out, test position, second, intermediate position, and third, racked-in, service position of said truck and circuit breaker assembly, said plate being positioned on said movable assembly.

In practice, in such embodiment, the mechanical indication of the position the truck and circuit breaker assembly is provided as a visual indication.

For instance said first, second and third visual indications can be respectively displayed at the outside of the enclosure of said switchgear - thorough, e.g., a suitable window - in correspondence of said first, racked-out, test position, second, intermediate position, and third, racked-in, service position of said truck and circuit breaker assembly. Wordings, symbols, colors or similar visual means can be used to indicate the positioning of the circuit breaker inside the switchgear.

For instance, in an embodiment of the electrical and mechanical circuit breaker position indicator of the present invention, said first, second and third visual indications can be advantageously positioned on said third plate of said kinematic chain.

Further features and advantages of the invention will emerge from the description of preferred, but not exclusive embodiments of an electrical and mechanical circuit breaker position indicator in in an electrical switchgear, particularly a MV switchgear, according to the invention, non-limiting examples of which are provided in the attached drawings, wherein:

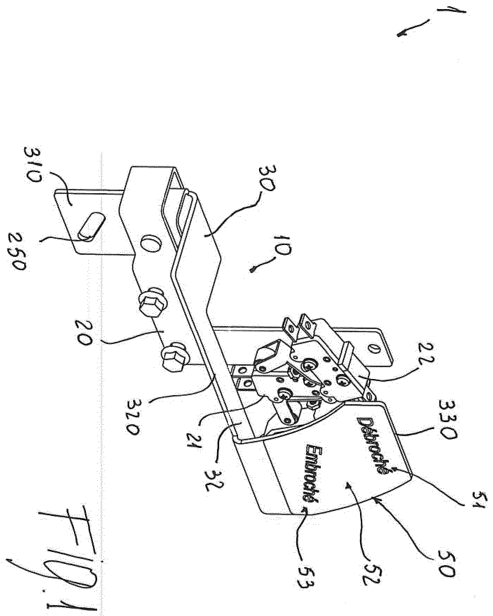

- Figure 1 is a perspective view of a first embodiment of an electrical and mechanical circuit breaker position indicator according to the invention;
- Figure 2 is a first side view of a first embodiment of an electrical and mechanical circuit breaker position indicator, according to the invention, in a first operative position;
- Figure 3 is a second side view of a first embodiment of an electrical and mechanical circuit breaker position indicator, according to the invention, in a first operative position;
- Figure 4 is a first side view of a first embodiment of an electrical and mechanical circuit breaker position indicator, according to the invention, in a second operative position;
- Figure 5 is a second side view of a first embodiment of an electrical and mechanical circuit breaker position indicator, according to the invention, in a second operative position;
- Figure 6 is a first side view of a first embodiment of an electrical and mechanical circuit breaker position indicator, according to the invention, in a third operative position;
- Figure 7 is a second side view of a first embodiment of an electrical and mechanical circuit breaker position indicator, according to the invention, in a third operative position;
- Figure 8 is a first side partial view of an electrical switchgear equipped with an electrical and mechanical circuit breaker position indicator, according to the invention, in a first operative position;
- Figure 9 is a second side partial view of an electrical switchgear equipped with an electrical and mechanical circuit breaker position indicator, according to the invention, in a second operative position;
- Figure 10 is a third side partial view of an electrical switchgear equipped with an electrical and mechanical circuit breaker position indicator, according to the invention, in a third operative position;

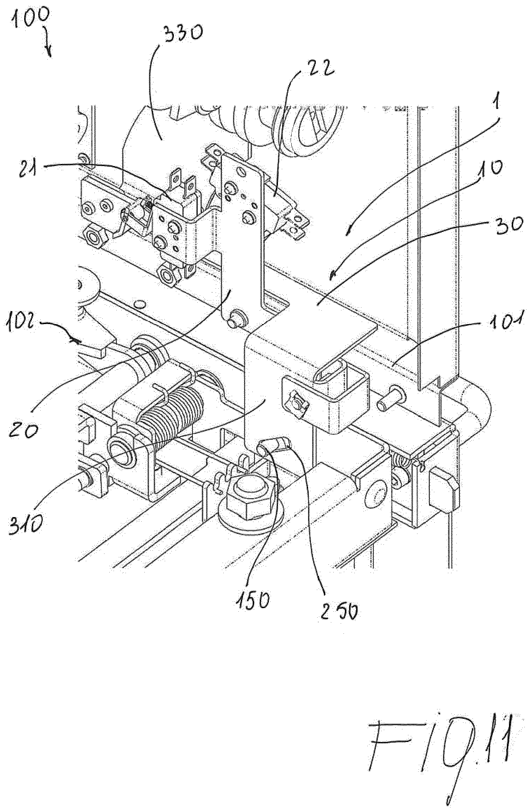

- Figure 11 is a perspective view of the interior of an electrical switchgear equipped with an electrical and mechanical circuit breaker position indicator according to the invention.

With reference to the attached Figures, an electrical and mechanical circuit breaker position indicator according to the invention - designated by the reference numeral 1 - is adapted to be used in an electrical switchgear, for instance a Medium Voltage switchgear - designated by the reference numeral 100.

The electrical switchgear comprises an enclosure 101 which houses a circuit breaker assembly (not shown, but of conventional type) mounted on a truck 102 which is movable between a first, racked-out, test position, a second, intermediate position, and a third, racked-in, service position of said circuit breaker assembly. Design and features of the enclosure 101 and circuit breaker and related truck 102, as well as the principles and design for operating the truck 102 and circuit breaker assembly between the different positions are of conventional type and will not be described with further details.

One of the characterizing features of the electrical and mechanical circuit breaker position indicator 1 is given by the fact that it comprises a single kinematic chain 10 which is operatively connected to said truck 102 and which is movable between a first, a second and a third operative position respectively in correspondence of said first, racked-out, test position, a second, intermediate position, and a third, racked-in, service position of said truck 102 and circuit breaker assembly.

Then, as better explained in the following description, the electrical and mechanical circuit breaker position indicator 1 is design so as to provide synchronized electrical signals and mechanical indications in correspondence of each of said first, racked-out, test position, second, intermediate position, and third, racked-in, service position of said truck 102 and circuit breaker assembly.

In particular, in the embodiments shown in the attached figures of the electrical and mechanical circuit breaker position indicator 1, the kinematic chain 10 comprises a frame 20 which is fixed on the enclosure 101 of the switchgear 100 and a movable assembly 30 which is pivoted on said frame 20 and is operatively connected to the truck 102 supporting the circuit breaker.

In order to provide the required electrical signals, the circuit breaker position indicator 1 device comprises a first 21 and a second 22 microswitches which are positioned on the frame 20 of the kinematic chain 10. The first 21 and second 22 microswitches are respectively actuated in correspondence of said first, racked-out, test position, and said third, racked-in, service position of said truck 102 and circuit breaker assembly, as better explained hereinafter.

In order to provide an actuation of the first 21 and second 22 microswitches in correspondence of the above-mentioned first and third positions of the truck 102 and circuit breaker assembly, said kinematic chain 10 comprises a first 31 and a second 32 actuating surface for respectively said first 21 and second 22 microswitches which are positioned on said movable assembly 30. In this way, the movement of the movable assembly 30 - which is actuated by the movement of the truck 30 - allows the proper activation of the first 21 and second 22 microswitches depending on the position of the truck 102 and circuit breaker assembly.

In the embodiments of the electrical and mechanical circuit breaker position indicator 1 of the attached figures, the movable assembly 30 comprises a first plate 310 which is pivotally connected to the fixed frame 20, a second elongated plate 320 which has a first end 321 rigidly connected to said first plate 310, and a third plate 330 which is rigidly connected to a second end 322, opposite to said first end 321, of said second elongated plate 320.

The first plate 310 extends from the first end 321 of said second elongated plate 320 in a first direction which is perpendicular to the longitudinal extension (i.e. the direction along which the second elongated plate 320 extends) of said second elongated plate 320; at the same time, the third plate 330 extends from said second end 322 of said second elongated plate 320 in a second direction which is perpendicular to the longitudinal extension of said second elongated plate 320 and opposite to said first direction.

In practice, when the circuit breaker position indicator 1 is positioned in the switchgear 100, the first 310 and third 330 plate are positioned in a vertical plane on opposite directions with respect to the second elongated plate 320.

Although the first 310, second 320 and third 330 plates can be made as separated pieces joined together, they are preferably made as a single body suitably shaped as described above. As previously said, the movable assembly 30 of the kinematic chain 10 is operatively coupled to the truck 102 and circuit breaker assembly. In the embodiment shown such coupling is carried out using a pin 150 connected to the truck 2 and inserted into a slot 250 provided in the first plate 310 of the movable assembly 30. The pin 150 is moved by the truck 102 and slides into the slot 150 determining the rotation of the movable assembly 30 around its pivot point on the frame 20 of the kinematic chain 10.

In the embodiment of the electrical and mechanical circuit breaker position indicator 1 shown, the first actuating surface 31 comprises a cam surface 315 which is positioned on the second elongated plate 320 of the movable assembly 30. The cam surface 315 cooperates with the first microswitch 21 - through, e.g., a first roller 316 - in correspondence of said first, racked-out, test position of said truck 102 and circuit breaker assembly, bringing the first microswitch 21 into its "active" position.

In turn, the second actuating surface 32 comprises a portion 325 of said second elongated plate 320 which cooperates with the second microswitch 22 - through, e.g., a second roller 326 - in correspondence of said third, racked-in, service position of said truck 102 and circuit breaker assembly, bringing the second microswitch 22 into its "rest" position.

In a general embodiment of the electrical and mechanical circuit breaker position indicator 1 of the invention, the kinematic chain 10 comprises a plate 50 having a first 51, a second 52, and a third 53 visual indication which are respectively representative of said first, racked-out, test position, second, intermediate position, and third, racked-in, service position of said truck 102 and circuit breaker assembly. The plate 50 is positioned on said movable assembly 30 and follows it during its movement driven by the truck 102.

The first 51, second 52 and third 53 visual indications are respectively displayed at the outside of the enclosure 101 of said switchgear 101, through e.g. a window 350, in correspondence of said first, racked-out, test position, second, intermediate position, and third, racked-in, service position of said truck 10 and circuit breaker assembly.

In practice, in the embodiment shown, the plate 50 corresponds to the third plate 330 of the movable assembly 30 and said first 51, second 52 and third 53 visual indications are positioned on said third plate 330 of said kinematic chain 10.

The functioning of the electrical and mechanical circuit breaker position indicator 1 of the invention will be now described with reference to the attached figure.

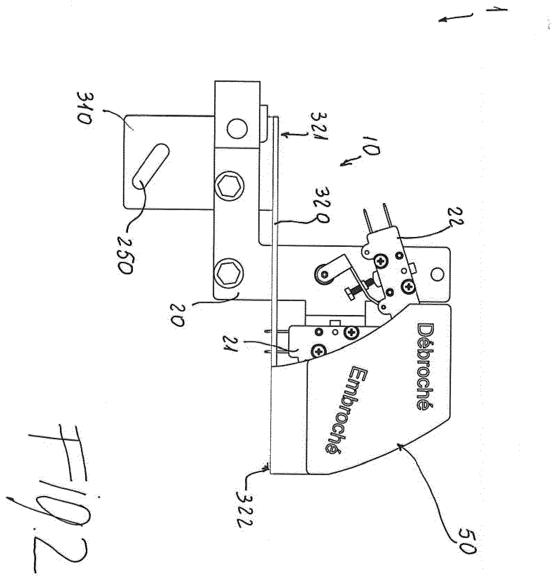

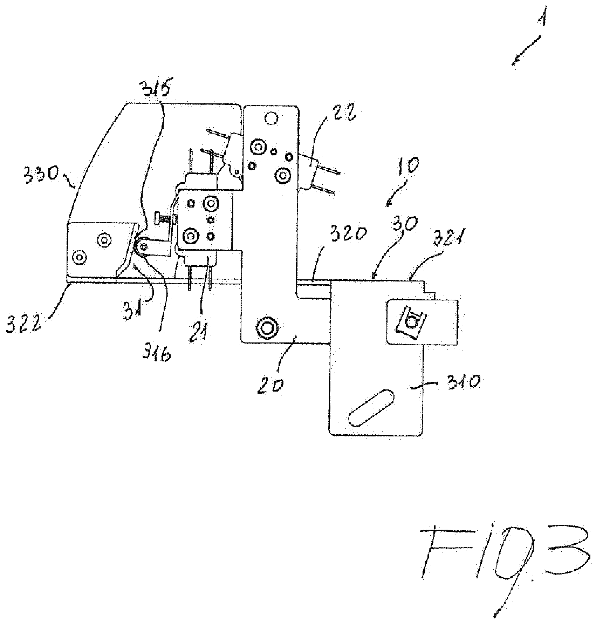

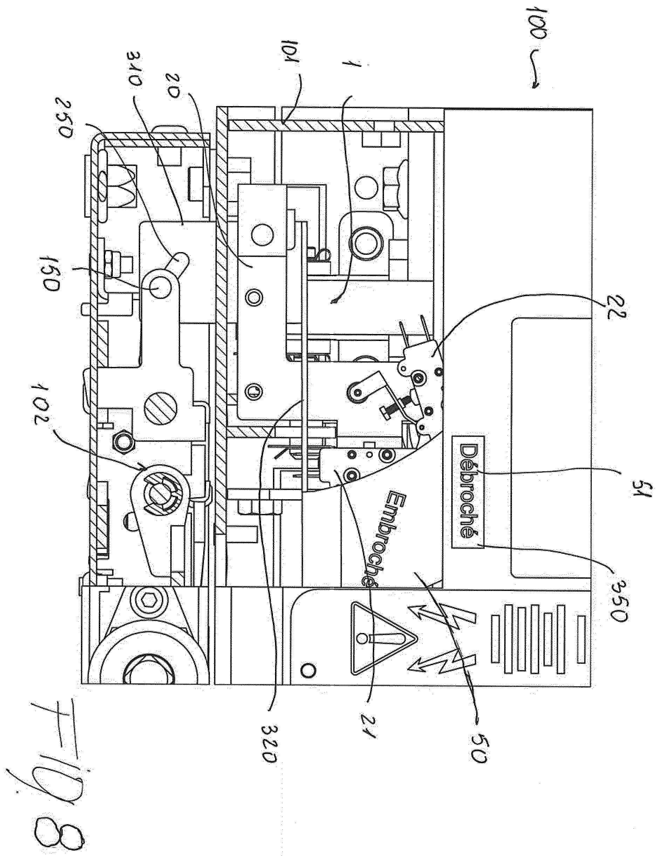

In the first, racked-out, test position of the truck 102 and circuit breaker assembly of figures 2,3 and 8, the first microswitch 21 is put in the "active" condition by the roller 316 pressed on to the cam surface 315, while the second microswitch 22 is in the "rest" condition. A first electrical signal representative of the first, racked-out, test position of the truck 102 is therefore detected. Simultaneously, a first visual indication 51 is displayed by the plate 50 through the window 350 of the enclosure 101 of the switchgear 100.

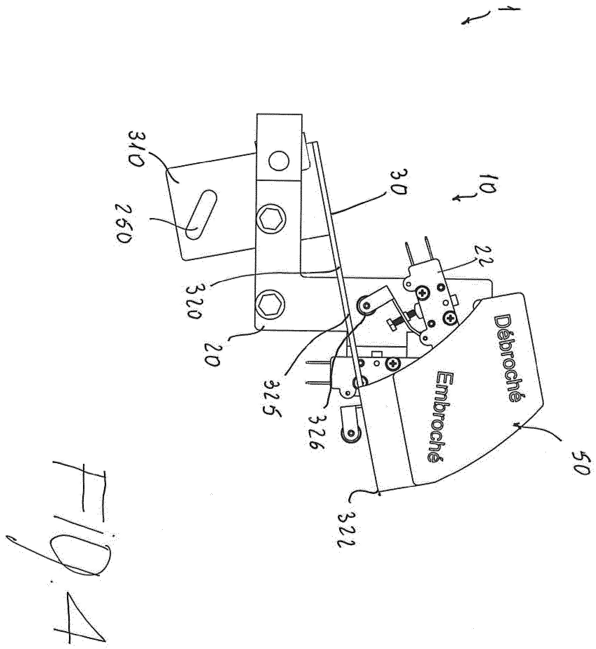

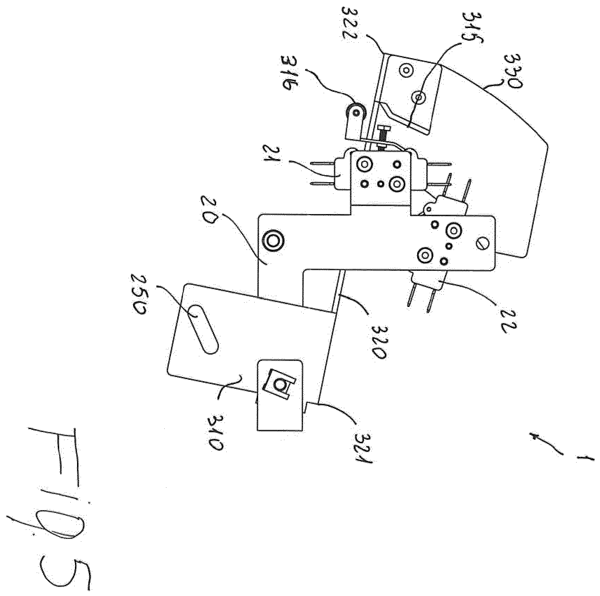

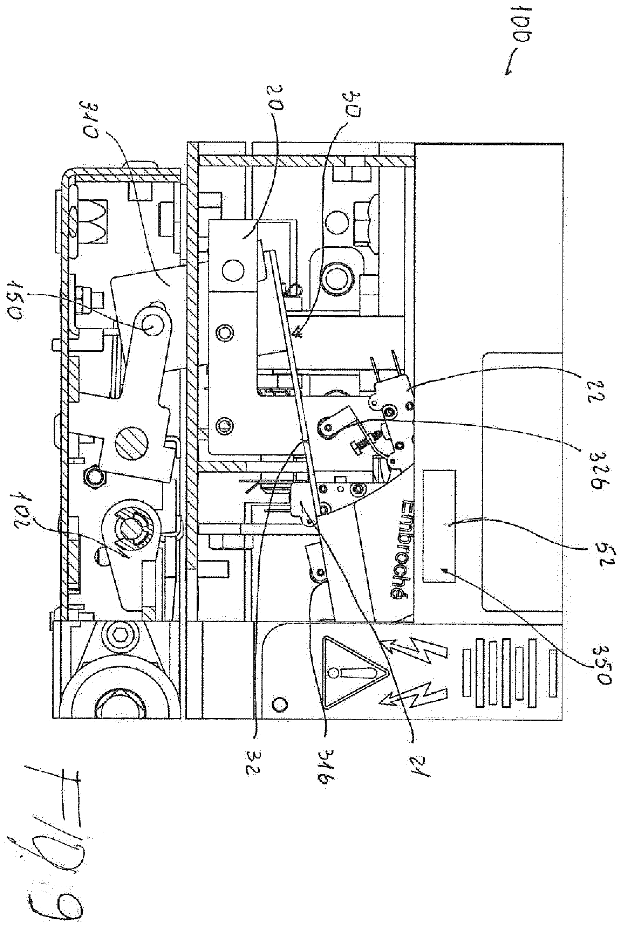

When the truck 102 is moved in its second, intermediate position, the movable assembly 30 of the kinematic chain 10 rotates around its pivot point of the frame 20 due to the action of the pin 150 in the slot 250 of the first plate 310. Thus, in the second, intermediate position, of the truck 102 and circuit breaker assembly of figures 4,5 and 9, both the first 21 and second 22 microswitches are put in the "rest" condition (the rollers 316 and 326 are disengaged by the corresponding actuating surfaces 315 and 325). A second electrical signal representative of the second, intermediate position of the truck 102 is therefore detected. Simultaneously, a second visual indication 52 (blank in this case) is displayed by the plate 50 through the window 350 of the enclosure 101 of the switchgear 100.

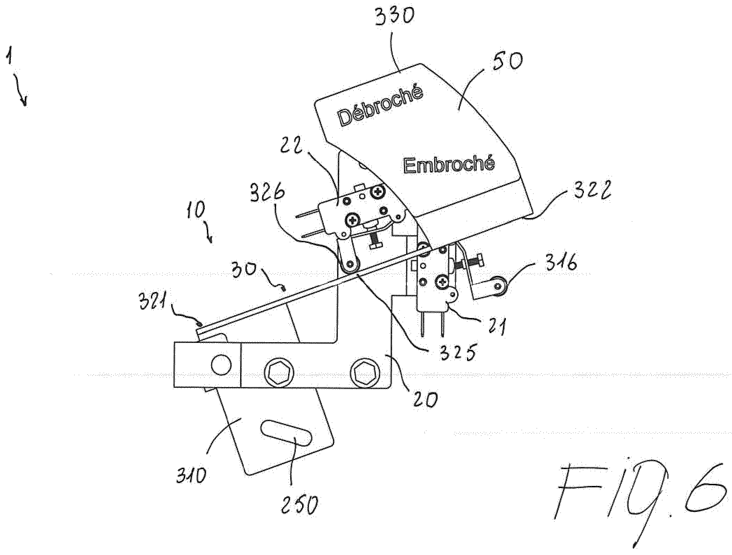

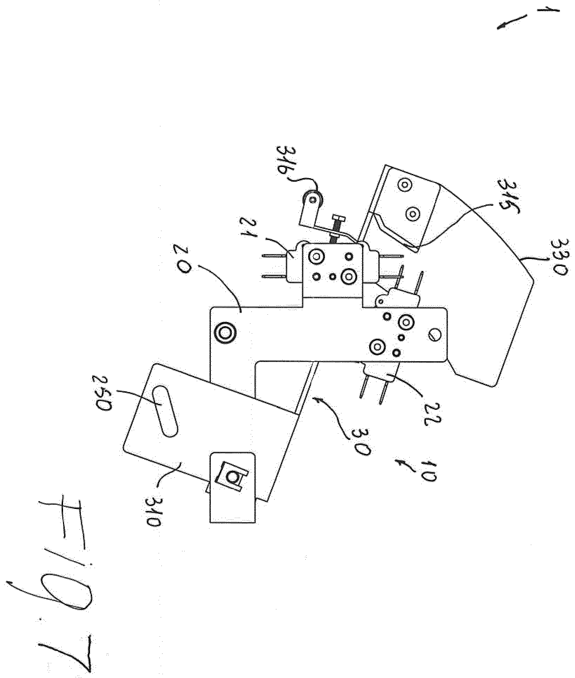

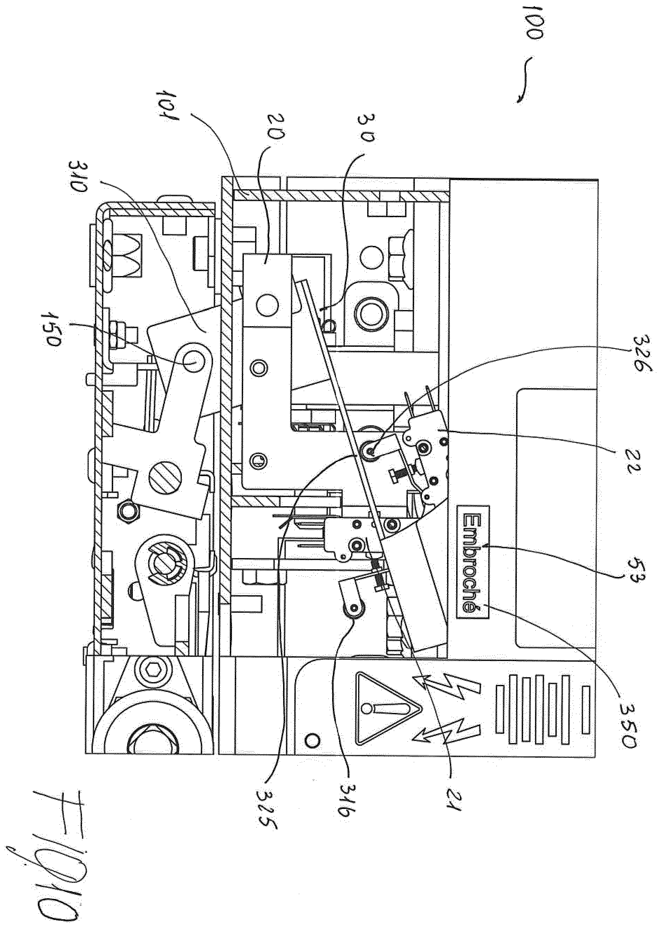

Finally, when the truck 102 is moved in its third, racked-in, service position, the movable assembly 30 of the kinematic chain 10 continues to rotate around its pivot point of the frame 20 due to the action of the pin 150 in the slot 250 of the first plate 310. Therefore, in the third, racked-in, service position of the truck 102 and circuit breaker assembly of figures 6,7 and 10, the first microswitch 21 is put in the "rest" condition (the roller 316 is disengaged from the cam surface 315), while the second microswitch 22 is put in the "active" condition by the roller 326 pressed by the actuating surface 325. A third electrical signal representative of the third, racked-in, service position of the truck 102 and circuit breaker assembly is therefore detected. Simultaneously, a third visual indication 53 is displayed by the plate 50 through the window 350 of the enclosure 101 of the switchgear 100.

The same operating principles apply also to the reverse operation of withdrawing (racking-out) the circuit breaker from the switchgear.

## Claims

1. An electrical switchgear (100) comprising an enclosure (101) housing a circuit breaker assembly mounted on a truck (102) movable between a first, racked-out, test position, a second, intermediate position, and a third, racked-in, service position of said circuit breaker assembly, and further comprising an electrical and mechanical circuit breaker position indicator (1), wherein said electrical and mechanical circuit breaker position indicator (1) comprises a kinematic chain (10) operatively connected to said truck (102) and movable between a first, a second and a third operative position respectively in correspondence of said first, racked-out, test position, second, intermediate position, and third, racked-in, service position of said truck (102) and circuit breaker assembly and providing an electrical signal and a mechanical indication in correspondence of each of said first, racked-out, test position, second, intermediate position, and third, racked-in, service position of said truck (102) and circuit breaker assembly, wherein said kinematic chain (10) comprises a frame (20) fixed on said enclosure (101) and a movable assembly (30) pivoted on said frame (20) and operatively connected to said truck (102), wherein said movable assembly (30) comprises a first plate (310) pivotally connected to said frame (20), a second elongated plate (320) having a first end (321) rigidly connected to said first plate (310), and a third plate (330) rigidly connected to a second end (322), opposite to said first end (321), of said second elongated plate (320), and further comprising a first (21) and a second (22) microswitches positioned on said frame (20) and respectively actuated in correspondence of said first, racked-out, test position, and said third, racked-in, service position of said truck (102) and circuit breaker assembly, wherein said kinematic chain (10) comprises a first (31) and a second (32) actuating surface of respectively said first (21) and second (22) microswitches positioned on said movable assembly (30), and wherein said first plate (310) extends from said first end (321) of said second elongated plate (320) in a first direction perpendicular to the longitudinal extension of said second elongated plate (320), and said third plate (330) extends from said second end (322) of said second elongated plate (320) in a second direction perpendicular to the longitudinal extension of said second elongated plate (320) and opposite to said first direction.

2. The electrical switchgear (100), according to claim 1, wherein said first actuating surface (31) comprises a cam surface (315) positioned on said second elongated plate (320) cooperating with said first microswitch (21) in correspondence of said first, racked-out, test position of said truck (102) and circuit breaker assembly, and wherein said second actuating surface (32) comprises a portion (325) of said second elongated plate (320) cooperating with said second microswitch (22) in correspondence of said third, racked-in, service position of said truck (102) and circuit breaker assembly.

3. The electrical switchgear (100), according to one or more of the previous claims, wherein said kinematic chain (10) comprises a plate (50) having first (51), second (52) and third (53) visual indications respectively representative of said first, racked-out, test position, second, intermediate position, and third, racked-in, service position of said truck (102) and circuit breaker assembly, said plate (50) being positioned on said movable assembly (30).

4. The electrical switchgear (100), according to claim 3, wherein said first (51), second (52) and third (53) visual indications are respectively displayed at the outside of the enclosure (101) of said switchgear in correspondence of said first, racked-out, test position, second, intermediate position, and third, racked-in, service position of said truck (102) and circuit breaker assembly.

5. The electrical switchgear (100), according to one or more of the previous claims, wherein said first (51), second (52) and third (53) visual indications are positioned on said third plate (330) of said kinematic chain (10).

## Patentansprüche

1. Elektrische Schaltanlage (100), umfassend ein Gehäuse (101), das eine Schutzschalteranordnung aufnimmt, montiert an einem Lastwagen (102), bewegbar zwischen einer ersten, ausgestreckten Testposition, einer zweiten, dazwischen liegenden Position und einer dritten, eingezogenen Wartungsposition der Schutzschalteranordnung und ferner umfassend einen elektrischen und mechanischen Positionsanzeiger für den Schutzschalter (1), wobei der elektrische und mechanische Positionsanzeiger für den Schutzschalter (1) eine kinematische Kette (10) umfasst, die mit dem Lastwagen (102) wirkverbunden ist und zwischen einer ersten, einer zweiten und einer dritten Betriebsposition entsprechend der ersten, ausgestreckten Testposition, einer zweiten, dazwischen liegenden Position, und einer dritten, eingezogenen Wartungsposition der Lastwagen- (102) und Schutzschalteranordnung bewegbar ist und ein elektrisches Signal und eine mechanischen Anzeige in Übereinstimmung mit jeder aus der ersten, ausgestreckten Testposition, der zweiten, dazwischen liegenden Position und der dritten, eingezogenen Wartungsposition der Lastwagen- (102) und Schutzschalteranordnung bereitstellend, wobei die kinematische Kette (10) einen Rahmen (20), der an dem Gehäuse (101) befestigt ist, und eine bewegbare Anordnung (30) umfasst, die an dem Rahmen (20) schwenkbar und mit dem Lastwagen (102) wirkverbunden ist, wobei die bewegbare Anordnung (30) eine erste Platte (310), die schwenkbar mit dem Rahmen (20) verbunden ist, eine zweite längliche Platte (320), die ein erstes Ende (321) aufweist, das starr mit der ersten Platte (310) verbunden ist, und eine dritte Platte (330), die starr mit einem zweiten Ende (322) der zweiten länglichen Platte (320), das dem ersten Ende (321) gegenüberliegt, verbunden ist, umfasst und ferner einen ersten (21) und einen zweiten (22) Mikroschalter umfasst, die an dem Rahmen (20) positioniert sind und entsprechend der ersten, ausgestreckten Testposition und der dritten, eingezogenen Wartungsposition der Lastwagen- (102) und Schutzschalteranordnung betätigt werden, wobei die kinematische Kette (10) eine erste (31) und eine zweite (32) Betätigungsfläche des ersten (21) bzw. zweiten (22) Mikroschalters umfasst, die auf der bewegbaren Anordnung (30) positioniert sind, und wobei sich die erste Platte (310) von dem ersten Ende (321) der zweiten länglichen Platte (320) in einer ersten Richtung senkrecht zu der Längserstreckung der zweiten länglichen Platte (320) erstreckt, und sich die dritte Platte (330) von dem zweiten Ende (322) der zweiten länglichen Platte (320) in einer zweiten Richtung senkrecht zu der Längserstreckung der zweiten länglichen Platte (320) und entgegengesetzt zu der ersten Richtung erstreckt.

2. Elektrische Schaltanlage (100) nach Anspruch 1, wobei die erste Betätigungsfläche (31) eine Nockenfläche (315) umfasst, die auf der zweiten länglichen Platte (320) positioniert ist, die mit dem ersten Mikroschalter (21) in Übereinstimmung mit der ersten, ausgestreckten Testposition der Lastwagen- (102) und Schutzschalteranordnung zusammenwirkt, und wobei die zweite Betätigungsfläche (32) einen Abschnitt (325) der zweiten länglichen Platte (320) umfasst, der mit dem zweiten Mikroschalter (22) in Übereinstimmung mit der dritten, eingezogenen Wartungsposition der Lastwagen- (102) und Schutzschalteranordnung zusammenwirkt.

3. Elektrische Schaltanlage (100) nach einem oder mehreren der vorhergehenden Ansprüche, wobei die kinematische Kette (10) eine Platte (50) mit einer ersten (51), einer zweiten (52) und einer dritten (53) visuellen Anzeige umfasst, die jeweils repräsentativ für die erste, ausgestreckte Testposition, die zweite, dazwischen liegende Position und die dritte, eingezogene Wartungsposition der Lastwagen- (102) und Schutzschalteranordnung sind, wobei die Platte (50) auf der bewegbaren Anordnung (30) positioniert ist.

4. Elektrische Schaltanlage (100) nach Anspruch 3, wobei die erste (51), die zweite (52) und die dritte (53) visuelle Anzeige jeweils an der Außenseite des Gehäuses (101) der Schaltanlage in Übereinstimmung mit der ersten, ausgestreckten Testposition, der zweiten, dazwischen liegenden Position und der dritten, eingezogenen Wartungsposition der Lastwagen- (102) und Schutzschalteranordnung angezeigt werden.

5. Elektrische Schaltanlage (100) nach einem oder mehreren der vorhergehenden Ansprüche, wobei die erste (51), die zweite (52) und die dritte (53) visuelle Anzeige auf der dritten Platte (330) der kinematischen Kette (10) positioniert sind.

## Revendications

1. Appareillage de commutation électrique (100) comprenant une enceinte (101) logeant un ensemble disjoncteur monté sur un chariot (102) mobile entre une première position de test débrochée, une seconde position intermédiaire, et une troisième position de service embrochée dudit ensemble disjoncteur, et comprenant en outre un indicateur de position électrique et mécanique de disjoncteur (1), dans lequel ledit indicateur de position électrique et mécanique de disjoncteur (1) comprend une chaîne cinématique (10) reliée fonctionnellement audit chariot (102) et mobile entre une première, une seconde et une troisième position fonctionnelle respectivement en correspondance desdites première position de test débrochée, seconde position intermédiaire, et troisième position de service embrochée desdits chariot (102) et ensemble disjoncteur et fournissant un signal électrique et une indication mécanique en correspondance de chacune desdites première position de test débrochée, seconde position intermédiaire, et troisième position de service embrochée desdits chariot (102) et ensemble disjoncteur, dans lequel ladite chaîne cinématique (10) comprend un châssis (20) fixé sur ladite enceinte (101) et un ensemble mobile (30) pivoté sur ledit châssis (20) et relié fonctionnellement audit chariot (102), dans lequel ledit ensemble mobile (30) comprend une première plaque (310) reliée de manière pivotante audit châssis (20), une seconde plaque allongée (320) ayant une première extrémité (321) reliée rigidement à ladite première plaque (310), et une troisième plaque (330) reliée rigidement à une seconde extrémité (322), opposée à ladite première extrémité (321), de ladite seconde plaque allongée (320), et comprenant en outre des premier (21) et second (22) microrupteurs positionnés sur ledit châssis (20) et respectivement actionnés en correspondance de ladite première position de test débrochée et de ladite troisième position de service embrochée desdits chariot (102) et ensemble disjoncteur, dans lequel ladite chaîne cinématique (10) comprend une première (31) et une seconde (32) surface d'actionnement respectivement desdits premier (21) et second (22) microrupteurs positionnés sur ledit ensemble mobile (30), et dans lequel ladite première plaque (310) s'étend à partir de ladite première extrémité (321) de ladite seconde plaque allongée (320) dans une première direction perpendiculaire à l'extension longitudinale de ladite seconde plaque allongée (320), et ladite troisième plaque (330) s'étend à partir de ladite seconde extrémité (322) de ladite seconde plaque allongée (320) dans une seconde direction perpendiculaire à l'extension longitudinale de ladite seconde plaque allongée (320) et opposée à ladite première direction.

2. Appareillage de commutation électrique (100) selon la revendication 1, dans lequel ladite première surface d'actionnement (31) comprend une surface de came (315) positionnée sur ladite seconde plaque allongée (320) coopérant avec ledit premier microrupteur (21) en correspondance de ladite première position de test débrochée desdits chariot (102) et ensemble disjoncteur, et dans lequel ladite seconde surface d'actionnement (32) comprend une partie (325) de ladite seconde plaque allongée (320) coopérant avec ledit second microrupteur (22) en correspondance de ladite troisième position de service embrochée desdits chariot (102) et ensemble disjoncteur.

3. Appareillage de commutation électrique (100) selon l'une ou plusieurs des revendications précédentes, dans lequel ladite chaîne cinématique (10) comprend une plaque (50) ayant des première (51), seconde (52) et troisième (53) indications visuelles respectivement représentatives des dites première position de test débrochée, seconde position intermédiaire, et troisième position de service embrochée desdits chariot (102) et ensemble disjoncteur, ladite plaque (50) étant positionnée sur ledit ensemble mobile (30).

4. Appareillage de commutation électrique (100) selon la revendication 3, dans lequel lesdites première (51), seconde (52) et troisième (53) indications visuelles sont respectivement affichées à l'extérieur de l'enceinte (101) dudit appareillage de commutation en correspondance desdites première position de test débrochée, seconde position intermédiaire, et troisième position de service embrochée desdits chariot (102) et ensemble disjoncteur.

5. Appareillage de commutation électrique (100) selon l'une ou plusieurs des revendications précédentes, dans lequel lesdites première (51), seconde (52) et troisième (53) indications visuelles sont positionnées sur ladite troisième plaque (330) de ladite chaîne cinématique (10).
